# EUROPÄISCHE PATENTSCHRIFT

(11) **EP 3 464 036 B1**
(45) Veröffentlichungstag und Bekanntmachung des Hinweises auf die Patenterteilung: **24.02.2021**
(21) Anmeldenummer: 17710265.4
(22) Anmeldetag: 13.03.2017
(51) Int. Cl.: B62J 1/12

(54) **VERRIEGELUNGSVORRICHTUNG FÜR EINE SITZBANK EINES MOTORRADES**
LOCKING DEVICE FOR A MOTORCYCLE SEAT
DISPOSITIF DE VERROUILLAGE POUR UN SIÈGE DE MOTO

(30) Priorität: 25.05.2016 DE 102016209092
(43) Veröffentlichungstag der Anmeldung: 10.04.2019
(73) Patentinhaber: Bayerische Motoren Werke Aktiengesellschaft, 80809 München (DE)
(72) Erfinder: REINHART, Peter, 82380 Peissenberg (DE); SIEVERS-PAULSEN, Johann, 85354 Freising (DE)
(86) Internationale Anmeldenummer: PCT/EP2017/055796
(87) Internationale Veröffentlichungsnummer: WO 2017/202515

(56) Entgegenhaltungen:
- US-A- 5 662 369
- US-A1- 2001 022 462
- US-A1- 2008 203 795

## Beschreibung

Die Erfindung betrifft ein Motorrad oder motorradähnliches Fahrzeug mit einer Verriegelungsvorrichtung gemäß dem Oberbegriff des Patentanspruchs 1.

Motorräder oder motorradähnliche Fahrzeuge weisen häufig eine Sitzbank auf, die entweder für den Fahrer des Fahrzeuges oder einen Sozius oder für beide gemeinsam vorgesehen und klappbar mit dem Fahrzeug verbunden ist. Die Sitzbank lässt sich üblicherweise zwischen einer geöffneten Position, die einen Zugang zu einem unter der Sitzbank vorhandenen Staufach ermöglicht, und einer geschlossenen Position verschwenken.

Um ein unbefugtes Aufklappen der Sitzbank zu verhindern, ist die Sitzbank in der Regel abschließbar ausgestaltet. Hierzu umfasst das Fahrzeug ein eigenes Schloss, welches mit einem Schlüssel, meist dem Zündschlüssel des Fahrzeugs, betätigt werden kann. Eine derartige Anordnung ist unter anderem aus der DE 297 06 896 U1 bekannt.

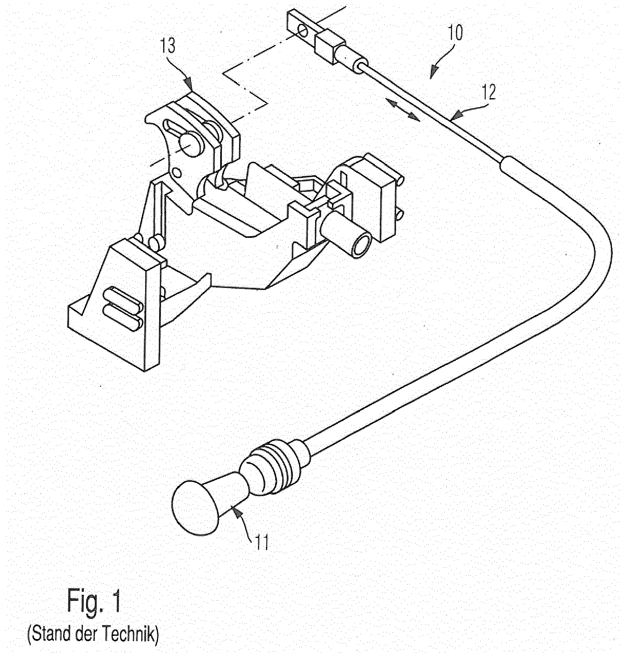

Eine alternative Verriegelung der Sitzbank ist aus dem Motorrad BMW K1200LT bekannt, die eine Entriegelung mittels eines Bowdenzuges vorsieht und in Fig. 1 als Stand der Technik dargestellt ist. Durch Betätigung eines Zugknopfes kann über den Bowdenzug eine Verriegelungsvorrichtung der Sitzbank entriegelt werden.

Weitere Verriegelungsvorrichtungen für Sitzbänke sind beispielsweise aus der US 2008/0203795 A1 und US 2001/0022462 A1 bekannt, wobei letztere die Merkmale der Präambel des Anspruchs 1 zeigt.

Aufgabe der Erfindung ist es, eine derartige Verriegelungsvorrichtung weiter zu verbessern, insbesondere eine zur Betätigung des Bowdenzuges erforderliche Zugkraft zu reduzieren.

Diese Aufgabe wird gelöst mit einem Motorrad oder motorradähnlichem Fahrzeug mit den Merkmalen des Patentanspruchs 1. Vorteilhafte Ausführungsformen ergeben sich aus den jeweils abhängigen Patentansprüchen.

Demnach wird eine Verriegelungsvorrichtung zum Verriegeln einer Sitzbank eines Fahrzeuges, insbesondere eines Motorrades oder motorradähnlichen Fahrzeugs, vorgestellt, mit einem Verriegelungselement zum Verriegeln der Sitzbank und einem Bowdenzug zum Betätigen der Verriegelungsvorrichtung, wobei der Bowdenzug mit einem ersten Ende mit dem Verriegelungselement verbunden ist. Außerdem ist ein zweites Ende des Bowdenzuges mit einem Betätigungshebel zum Betätigen des Bowdenzuges verbunden.

Als Sitzbank des Fahrzeuges ist insbesondere der Fahrersitz und/oder der Sitz eines Beifahrers (der sogenannte Sozius), oder ein für beide Personen durchgängiger Sitz zu verstehen und stellt in der Regel eine Verschlussklappe beziehungsweise einen Deckel für einen unter der Sitzbank angeordneten Stauraum dar. Die Sitzbank kann mit Hilfe der Verriegelungsvorrichtung in einer geschlossenen Position, die in der Regel gleichzeitig die Betriebsposition des Fahrzeuges darstellt, verschlossen sein, indem das Verriegelungselement beispielsweise mit einer geeigneten Ausnehmung oder einem Hinterschnitt der Sitzbank in Eingriff steht. Über den Bowdenzug kann das Verriegelungselement bei Bedarf aus dem Eingriff gelöst werden, so dass die Verriegelungsvorrichtung entriegelt wird und die Sitzbank geöffnet werden kann. Unter dem Begriff des Bowdenzuges sind im Rahmen der Beschreibung auch ein Seilzug oder ein Kabelzug zu verstehen.

Um eine zur Betätigung des Bowdenzuges erforderliche Zugkraft für einen Nutzer gering zu halten und die Bedienung leicht zu gestalten, ist an dem zweiten Ende des Bowdenzuges ein Betätigungshebel vorgesehen.

Beispielsweise kann das zweite Ende des Bowdenzuges beabstandet zu einer Drehachse des Betätigungshebels mit dem Betätigungshebel verbunden sein. Die Verbindung des zweiten Endes ist somit exzentrisch zu der Drehachse angeordnet, so dass sich über eine Anpassung der sich ergebenden Hebellängen eine zur Betätigung des Betätigungshebels erforderliche Zugkraft leicht einstellen und dosieren lässt.

Des Weiteren kann das zweite Ende des Bowdenzuges verschiebbar in einem Langloch des Betätigungshebels gelagert sein. Dies bedeutet, dass an oder in dem Betätigungshebel das Langloch vorgesehen ist und das zweite Ende in dieses derart eingreift, dass sich das zweite Ende innerhalb des Langlochs verschiebbar bewegen lässt. Dies bietet die Möglichkeit, dass der Betätigungshebel einen ersten Bewegungsumfang aufweist, in dem sich bei einer Bewegung des Betätigungshebels zwar lediglich das zweite Ende innerhalb des Langloches bewegt, jedoch noch keine Zugkraft auf den Bowdenzug ausgeübt wird. Erst nachdem das zweite Ende am Rand des Langloches angelangt ist, wird eine resultierende Zugkraft auf den Bowdenzug bewirkt, um das Verriegelungselement zu betätigen.

Diese Ausführungsform ermöglicht beispielsweise, dass der Betätigungshebel dem Nutzer zunächst ohne eine Zugkraft entgegen bewegt werden kann, so dass der Nutzer den Betätigungshebel besser greifen kann. Dies kann zum Beispiel mittels einer vorgespannten Feder erfolgen, die den Betätigungshebel im Rahmen des ersten Bewegungsumfanges aus einer zurückgesetzten Position in eine leicht greifbare Betätigungsposition bewegt, ohne dass hierbei eine Zugkraft auf den Bowdenzug bewirkt wird.

Des Weiteren kann das Verriegelungselement drehbeweglich um eine Drehachse ausgebildet sein und einen Haken zum Verriegeln der Sitzbank umfassen. Mit Hilfe des Hakens kann das Verriegelungselement in Eingriff mit einer Ausnehmung oder einem Hinterschnitt der Sitzbank gebracht werden. Aufgrund der Drehbeweglichkeit des Verriegelungselements kann über eine geeignete Auswahl eines exzentrisch zur Drehachse angeordneten Anbindungspunktes des ersten Endes des Bowdenzuges ein geeignetes Hebelverhältnis zur Bereitstellung der gewünschten Kräfte der Verbindungsvorrichtung gewählt werden.

Erfindungsgemäß wird ein Motorrad oder motorradähnliches Fahrzeug, bereitgestellt, mit einer Sitzbank, die zwischen einer geschlossenen und einer geöffneten Position klappbar ist, und einer Verriegelungsvorrichtung zum Verriegeln der Sitzbank in der geschlossenen Position. Die Verriegelungsvorrichtung ist hierbei gemäß der Beschreibung ausgebildet.

Als motorradähnliches Fahrzeug ist insbesondere ein Motorroller, zum Beispiel ein zweirädriger, dreirädriger oder vierrädriger Motorroller, ein Scooter, ein Trike, ein Quad oder dergleichen zu verstehen.

Erfindungsgemäß ist der Betätigungshebel in einem verschließbaren Gepäckfach des Fahrzeuges angeordnet. Dies bedeutet, dass der Betätigungshebel nur bei geöffnetem Gepäckfach zugänglich ist. Auf diese Weise kann eine unbefugte Betätigung des Betätigungshebels durch ein Verschließen des Gepäckfaches verhindert werden. Mangels Zugänglichkeit des Betätigungshebels ist dementsprechend gleichzeitig ein unbefugtes Öffnen der Sitzbank unterbunden. Diese Ausführung bietet den Vorteil, dass lediglich das Gepäckbehältnis verschlossen werden muss. Üblicherweise ist dies ohnehin der Fall, um ein in dem Gepäckbehältnis befindliches Gepäck zu sichern. Jedoch kann auf diese Weise auf ein separates Schloss zum Verschließen der Sitzbank verzichtet werden.

Beispielsweise ist das Gepäckfach ein Seitenkoffer des Fahrzeuges. Insbesondere ist der Seitenkoffer seitlich am Fahrzeug im Bereich eines Hinterrades fest mit dem Fahrzeug verbaut. Besonders bevorzugt ist der Seitenkoffer fest an dem Fahrzeug montiert, so dass der Seitenkoffer fester Fahrzeugbestandteil ist und nicht zur regelmäßigen Demontage durch den Nutzer vorgesehen ist. Insbesondere kann der Seitenkoffer Beleuchtungselemente des Fahrzeuges umfassen, wie zum Beispiel Rückleuchten, Blinker oder dergleichen.

Vorzugsweise umfasst der Seitenkoffer einen fahrzeugfesten Kofferteil, wobei der Betätigungshebel in dem fahrzeugfesten Kofferteil angeordnet ist. Ebenfalls vorzugsweise kann der Betätigungshebel in einem ein Stauvolumen definierenden Innenraum des Kofferteils und/oder in einem Verbindungsbereich zu einem zweiten Kofferteil angeordnet sein.

Dies bedeutet jedenfalls, dass der Betätigungshebel in einem geschlossenen Zustand des Seitenkoffers im Inneren angeordnet und somit von außen nicht zugänglich ist. Hierbei kann der Betätigungshebel an einer beliebigen Stelle innerhalb des Stauvolumens des fahrzeugfesten Kofferteils angeordnet sein. Als Verbindungsbereich ist zum Beispiel eine Stirnseite des fahrzeugfesten Kofferteils zu verstehen, die im geschlossenen Zustand des Seitenkoffers von dem zweiten Kofferteil beaufschlagt oder zumindest abgedeckt ist.

Des Weiteren kann der zweite Kofferteil derart ausgestaltet sein, dass dieser den Betätigungshebel in einem geschlossenen Zustand des Seitenkoffers in der gegenüber der (leicht greifbaren) Betätigungsposition zurückgesetzten Position hält. Dies kann beispielswiese dadurch erfolgen, dass der Betätigungshebel beim Schließen des Seitenkoffers von dem zweiten Kofferteil beaufschlagt und durch die Schließbewegung in die zurückgesetzte Position gedrückt wird. Vorzugsweise ist hierbei der Betätigungshebel mit dem beschriebenen Langloch ausgeführt, um den ersten Bewegungsumfang bereitzustellen, der hierfür genutzt werden kann. Der Betätigungshebel verschwindet also im geschlossenen Zustand des Seitenkoffers platzsparend in der zurückgesetzten Position, ist jedoch im geöffneten Zustand in der leicht greifbaren Betätigungsposition für den Nutzer leicht zugänglich.

Zusätzlich kann in diesem Fall der Betätigungshebel dem Nutzer beim Öffnen des Seitenkoffers entgegen bewegt werden, so dass dieser den Betätigungshebel besser greifen kann. Dies kann optional mittels der vorgespannten Feder erfolgen, die den Betätigungshebel im Rahmen des ersten Bewegungsumfanges aus der zurückgesetzten Position in die leicht greifbare Betätigungsposition bewegt, ohne dass hierbei eine Zugkraft auf den Bowdenzug bewirkt wird.

Die Erfindung wird nachfolgend anhand eines Ausführungsbeispiels unter Bezugnahme auf die Zeichnungen im Detail beschrieben. Es zeigen:
Fig. 1 eine Verriegelungsvorrichtung gemäß dem Stand der Technik,
Fig. 2 eine Verriegelungsvorrichtung in perspektivischer Ansicht gemäß der Beschreibung,
Fig. 3 eine teilweise Draufsicht auf die Verriegelungsvorrichtung gemäß Fig. 2 in einer geschlossenen Stellung, und
Fig. 4 eine teilweise Draufsicht auf die Verriegelungsvorrichtung gemäß Fig. 2 in einer geschlossenen Stellung.

Fig. 1 zeigt eine Verriegelungsvorrichtung 10 einer Sitzbank (nicht dargestellt) gemäß dem Stand der Technik, die in dem Motorrad BMW K1200LT zum Einsatz kommt. Durch Betätigung eines Zugknopfes 11 kann über einen Bowdenzug 12 die Verriegelungsvorrichtung 10 entriegelt werden, indem ein Verriegelungselement 13 aus einem Eingriff mit der Sitzbank gebracht wird.

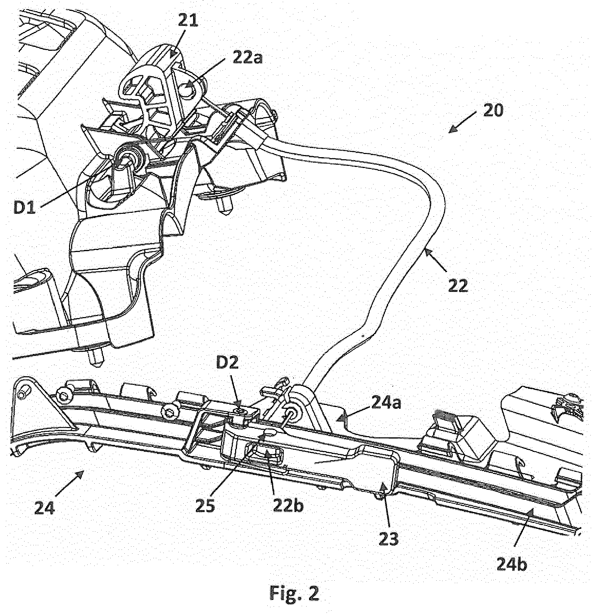

Fig. 2 zeigt in perspektivischer Ansicht eine Verriegelungsvorrichtung 20 gemäß der Beschreibung. Die Verriegelungsvorrichtung 20 ist zum Verriegeln einer Sitzbank (nicht dargestellt) eines Fahrzeuges, insbesondere eines Motorrades oder motorradähnlichen Fahrzeugs, ausgebildet. Hierzu umfasst die Verriegelungsvorrichtung 20 ein Verriegelungselement 21 zum Verriegeln der Sitzbank und einen Bowdenzug 22 zum Betätigen der Verriegelungsvorrichtung 20. Das Verriegelungselement 21 selbst ist drehbeweglich um eine Drehachse D1 ausgebildet und umfasst einen Haken zum Verriegeln der Sitzbank.

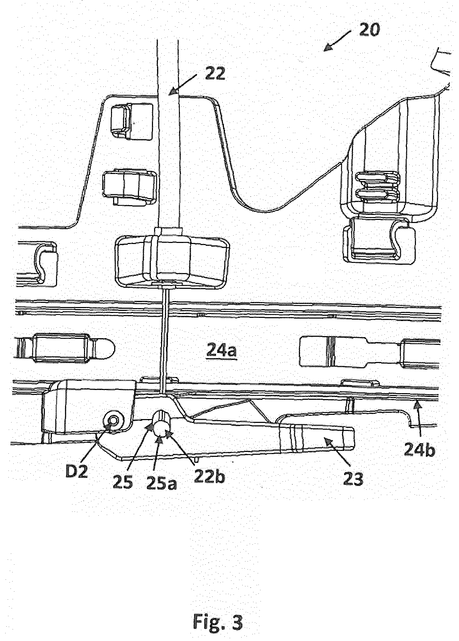

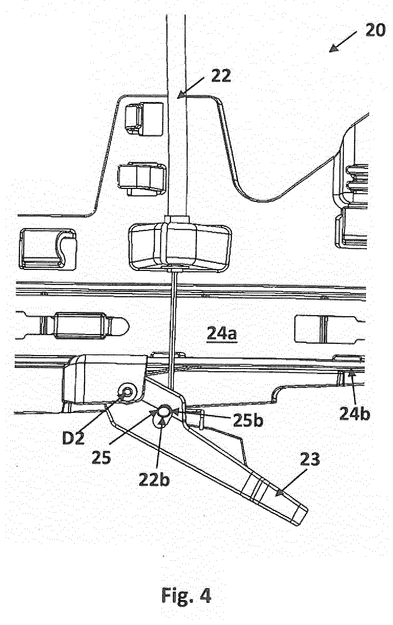

Der Bowdenzug 22 ist mit einem ersten Ende 22a mit dem Verriegelungselement 21 verbunden. Ein zweites Ende 22b des Bowdenzuges 22 ist mit einem Betätigungshebel 23 zum Betätigen des Bowdenzuges 22 verbunden. Wie in Fig. 3 und 4 dargestellt, ist das zweite Ende 22b exzentrisch beabstandet zu einer Drehachse D2 des Betätigungshebels 23 mit diesem 23 verbunden.

Die Verbindung ist derart ausgestaltet, dass das zweite Ende 22b des Bowdenzuges 22 verschiebbar in einem Langloch 25 des Betätigungshebels 23 gelagert ist.

Des Weiteren ist der Betätigungshebel 23 innerhalb eines (lediglich teilweise dargestellten) verschließbaren Gepäckfachs 24 angeordnet, wobei das Gepäckfach 24 ein Seitenkoffer des Fahrzeuges ist. Dieser umfasst ein fahrzeugfesten Kofferteil 24a, in welchem der Betätigungshebel 23 angeordnet ist. In der dargestellten Ausführungsform ist der Betätigungshebel 23 in einem Verbindungsbereich 24b zu einem zweiten Kofferteil (nicht dargestellt) angeordnet. Der Verbindungsbereich 24b wird von einer Stirnseite des fahrzeugfesten Kofferteils 24a definiert und dementsprechend in einem geschlossenen Zustand des Seitenkoffers von dem zweiten Kofferteil verdeckt, so dass der Betätigungshebel 23 vor unbefugtem Gebrauch geschützt ist.

Des Weiteren kann der zweite Kofferteil derart ausgestaltet sein, dass dieser den Betätigungshebel in einem geschlossenen Zustand des Seitenkoffers in der gegenüber der Betätigungsposition zurückgesetzte Position gemäß Fig. 2 und 3 hält beziehungsweise in diese drückt.

In Fig. 3 ist eine teilweise Draufsicht auf die Verriegelungsvorrichtung 20 gemäß Fig. 2 dargestellt, die sich weiterhin in der geschlossenen Stellung befindet. Der Betätigungshebel 23 ist an dem fahrzeugfesten Kofferteil 24a in der zurückgesetzten Position angeordnet. Hierbei ist das zweite Ende 22b des Bowdenzuges 22 an einem entfernten Ende 25a des Langloches 25 exzentrisch zur Drehachse D2 angeordnet.

Wird - wie in Fig. 4 dargestellt - der Betätigungshebel 23 zum Entriegeln der Verriegelungsvorrichtung 20 betätigt, so wird das zweite Ende 22b des Bowdenzuges 22 zunächst in Längsrichtung des Langloches 25 verschoben, bis es an das dem Bowdenzug 22 nahen Ende 25b angelangt. Erst jetzt erfolgt eine Zugkrafteinleitung auf den Bowdenzug 22, der das Verriegelungselement 21 in Bewegung versetzt und aus dem Eingriff mit der Sitzbank löst, um diese zum Öffnen freizugeben.

## Patentansprüche

1. Motorrad oder motorradähnliches Fahrzeug, mit einer Sitzbank, die zwischen einer geschlossenen und einer geöffneten Position klappbar ist, und einer Verriegelungsvorrichtung (20) zum Verriegeln der Sitzbank in der geschlossenen Position, wobei die Verriegelungsvorrichtung (20) zum Verriegeln der Sitzbank mit einem Verriegelungselement (21) zum Verriegeln der Sitzbank und einem Bowdenzug (22) zum Betätigen der Verriegelungsvorrichtung (20) ausgebildet ist, wobei der Bowdenzug (22) mit einem ersten Ende (22a) mit dem Verriegelungselement (21) verbunden ist, wobei ein zweites Ende (22b) des Bowdenzuges (22) mit einem Betätigungshebel (23) zum Betätigen des Bowdenzuges (22) verbunden ist, **dadurch gekennzeichnet, dass** der Betätigungshebel (23) innerhalb eines verschließbaren Gepäckfachs (24) angeordnet ist.

2. Fahrzeug nach Anspruch 1, **dadurch gekennzeichnet, dass** das zweite Ende (22b) des Bowdenzuges (22) beabstandet zu einer Drehachse (D2) des Betätigungshebels (23) mit dem Betätigungshebel (23) verbunden ist.

3. Fahrzeug nach Anspruch 1 oder 2, **dadurch gekennzeichnet, dass** das zweite Ende (22b) des Bowdenzuges (22) verschiebbar in einem Langloch (25) des Betätigungshebels (23) gelagert ist.

4. Fahrzeug nach mindestens einem der Ansprüche 1 bis 3, **dadurch gekennzeichnet, dass** das Verriegelungselement (21) drehbeweglich um eine Drehachse (D1) ausgebildet ist und einen Haken zum Verriegeln der Sitzbank umfasst.

5. Fahrzeug nach mindestens einem der Ansprüche 1 bis 4, **dadurch gekennzeichnet, dass** das Gepäckfach (24) ein Seitenkoffer des Fahrzeuges ist.

6. Fahrzeug nach Anspruch 5, **dadurch gekennzeichnet, dass** der Seitenkoffer einen fahrzeugfesten Kofferteil (24a) umfasst, wobei der Betätigungshebel (23) in dem fahrzeugfesten Kofferteil (24a) angeordnet ist.

7. Fahrzeug nach Anspruch 6, **dadurch gekennzeichnet, dass** der Betätigungshebel (23) in einem ein Stauvolumen definierenden Innenraum des fahrzeugfesten Kofferteils (24a) und/oder in einem Verbindungsbereich (24b) zu einem zweiten Kofferteil angeordnet ist.

8. Fahrzeug nach Anspruch 7, **dadurch gekennzeichnet, dass** der zweite Kofferteil derart ausgestaltet ist, dass dieser den Betätigungshebel (23) in einem geschlossenen Zustand des Seitenkoffers in einer gegenüber einer Betätigungsposition zurückgesetzten Position hält.

## Claims

1. Motorcycle or motorcycle-like vehicle, with a bench seat which can be folded between a closed and an open position, and with a locking apparatus (20) for locking the bench seat in the closed position, the locking apparatus (20) for locking the bench seat comprises a locking element (21) for locking the bench seat and a Bowden cable (22) for actuating the locking apparatus (20), the Bowden cable (22) being connected by way of a first end (22a) to the locking element (21), a second end (22b) of the Bowden cable (22) being connected to an actuating lever (23) for the actuation of the Bowden cable (22), **characterized in that** the actuating lever (23) is arranged within a lockable luggage compartment (24) .

2. Vehicle according to Claim 1, **characterized in that** the second end (22b) of the Bowden cable (22) is connected to the actuating lever (23) in a manner which is spaced apart from a rotational axis (D2) of the actuating lever (23) .

3. Vehicle according to Claim 1 or 2, **characterized in that** the second end (22b) of the Bowden cable (22) is mounted displaceably in a slot (25) of the actuating lever (23).

4. Vehicle according to at least one of Claims 1 to 3, **characterized in that** the locking element (21) is configured such that it can be moved rotatably about a rotational axis (Dl), and comprises a hook for locking the bench seat.

5. Vehicle according to at least one of Claims 1 to 4, **characterized in that** the luggage compartment (24) is a side pannier of the vehicle.

6. Vehicle according to Claim 5, **characterized in that** the side pannier comprises a pannier part (24a) which is fixed to the vehicle, the actuating lever (23) being arranged in the pannier part (24a) which is fixed to the vehicle.

7. Vehicle according to Claim 6, **characterized in that** the actuating lever (23) is arranged in an interior space of the pannier part (24a) which is fixed to the vehicle, which interior space defines a storage volume, and/or is arranged in a connecting region (24b) to a second pannier part.

8. Vehicle according to Claim 7, **characterized in that** the second pannier part is configured in such a way that, in a closed state of the side pannier, it holds the actuating lever (23) in a position which is set back with respect to an actuating position.

## Revendications

1. Motocyclette ou véhicule similaire à une motocyclette, comprenant
une banquette qui est rabattable entre une position fermée et une position ouverte, et un dispositif de verrouillage (20) destiné à verrouiller la banquette en position fermée, dans lequel le dispositif de verrouillage (20) destiné à verrouiller le siège est conçu avec un élément de verrouillage (21) destiné à verrouiller la banquette et un câble Bowden (22) destiné à actionner le dispositif de verrouillage (20), le câble Bowden (22) étant relié par une première extrémité (22a) à l'élément de verrouillage (21), une deuxième extrémité (22b) du câble Bowden (22) étant reliée à un levier d'actionnement (23) destiné à actionner le câble Bowden (22), **caractérisé en ce que** le levier d'actionnement (23) est disposé à l'intérieur d'un compartiment à bagages (24) pouvant être fermé.

2. Véhicule selon la revendication 1, **caractérisé en ce que** la deuxième extrémité (22b) du câble Bowden (22) est reliée au levier d'actionnement (23) à distance d'un axe de rotation (D2) du levier d'actionnement (23).

3. Véhicule selon la revendication 1 ou 2, **caractérisé en ce que** la deuxième extrémité (22b) du câble Bowden (22) est montée de manière coulissante dans un trou oblong (25) du levier d'actionnement (23).

4. Véhicule selon l'une au moins des revendications 1 à 3, **caractérisé en ce que** l'élément de verrouillage (21) est conçu pour être mobile en rotation sur un axe de rotation (D1) et comprend un crochet destiné au verrouillage de la banquette.

5. Véhicule selon l'une au moins des revendications 1 à 4, **caractérisé en ce que** le compartiment à bagages (24) est un coffre latéral du véhicule.

6. Véhicule selon la revendication 5, **caractérisé en ce que** le coffre latéral comprend une partie de coffre (24a) fixée au véhicule, le levier d'actionnement (23) étant disposé dans la partie de coffre (24a) fixée au véhicule.

7. Véhicule selon la revendication 6, **caractérisé en ce que** le levier d'actionnement (23) est disposé dans un espace intérieur, définissant un volume de rangement, de la partie de coffre (24a) fixée au véhicule et/ou dans une zone de liaison (24b) à une deuxième partie de coffre.

8. Véhicule selon la revendication 7, **caractérisé en ce que** la deuxième partie de coffre est conçue de façon à maintenir le levier d'actionnement (23) dans un état fermé du coffre latéral dans une position en retrait par rapport à une position d'actionnement.
